**Europäisches Patentamt**

**European Patent Office**

**Office européen des brevets**

(11) Veröffentlichungsnummer: **0 128 410**
A1

(12) ## EUROPÄISCHE PATENTANMELDUNG

(21) Anmeldenummer: **84105818.3**

(22) Anmeldetag: **22.05.84**

(51) Int. Cl.³: **D 03 D 1/00,** B 60 C 9/00

(30) Priorität: **03.06.83 DE 3320162**

(43) Veröffentlichungstag der Anmeldung: **19.12.84 Patentblatt 84/51**

(84) Benannte Vertragsstaaten: **AT BE CH DE FR GB IT LI LU NL SE**

(71) Anmelder: **OLBO Textilwerke GmbH, Aachener Strasse 5, D-5650 Solingen 11 (DE)**

(72) Erfinder: **Alker, Heinrich, Am Eichelkamp 219, D-4010 Hilden (Rhld.) (DE)**
Erfinder: **Krebs, Wilfried, Höhmannsberg 16, D-5650 Solingen 1 (DE)**
Erfinder: **Dressler, Eckhard, Thom. v.d. Aquinstrasse 2, D-5090 Leverkusen 1 (DE)**

(74) Vertreter: **Gille, Christian, Dipl.-Ing. et al, Redies, Redies, Türk & Gille Bruckner Strasse 20, D-4000 Düsseldorf 13 (DE)**

(54) **Cordgewebe für Luftreifen.**

(57) Es ist ein aus einer Mehrzahl von parallel zueinander liegenden Kettfäden (2) und mit diesen verwebten Schußfäden (3) bestehendes Cordgewebe (1) für Luftreifen offenbart, bei dem die Schußfäden (3) vor dem Imprägnieren des Gewebes eine endliche Länge aufweisen, die etwa um das Ausmaß der beim Imprägnieren auftretenden Schrumpfung größer als die Breite des Cordgewebes ist. Die Enden (3a, 3b) der Schußfäden (3) sind zunächst in das Cordgewebe (1) zurückgeschlagen, werden jedoch beim Imprägnieren durch die Schrumpfung zurückgezogen, so daß sie beim imprägnierten Cordgewebe (1) schließlich an den natürlich gewebten Rändern oder Kanten (4, 5) des Cordgewebes (1) liegen.

0128410

OLBO-Textilwerke GmbH, Aachener Str. 5, 5650 Solingen 11

Cordgewebe für Luftreifen

Die Erfindung betrifft ein Cordgewebe für Luftreifen, das aus einer Mehrzahl von parallel zueinander liegenden Kettfäden und aus mit diesen verwebten Schußfäden besteht.

Es ist üblich, für Luftreifen bestimmte Cordgewebe in der Weise herzustellen, daß die Schußfäden ohne Unterbrechungen eingewebt werden und dementsprechend an den Seitenkanten des Gewebes umgelegt sind und unmittelbar in den jeweils nächsten Schuß übergehen. Beim anschließenden Imprägnieren (Dippen) des Cordgewebes werden die Cordfäden verstreckt. Das bedeutet, daß als erstes die Ketteinarbeitung, der sog. Crimp, herausgezogen wird. Dies hat zur Folge, daß das Gewebe schmaler wird und der Schuß-Crimp oder die Schußeinarbeitung sich erhöht. Während des Vorganges wird aber auch durch Breitstreckwalzen versucht, die Breite des Cordgewebes zu halten. Dadurch wird an den Kanten der Schuß die Kettfäden zusammenziehen, so daß eine höhere Dichte im Kantenbereich eintritt. Dies versucht man zu beheben, indem schußlos von einem Gatter die Cordfäden in die Dip-Anlage laufen oder es wird ein plastischer Schuß verwendet, der den höheren Schußcrimp durch plastische Dehnung mitmacht. Damit diese durch das Imprägnieren bekannter Cordgewebe entstehenden ungünstigen Erscheinungen sich nicht negativ auf die mit dem Cordgewebe herzustellenden Luftreifen auswirken können, ist es derzeit üblich, nach dem Imprägnieren und Friktionieren die Kantenbereiche auf einer solchen Breite abzuschneiden, daß die Streifen, in denen eine Kettfadendrängung bzw. eine Verdickung des Gewebes durch die beim Imprägnieren auftretende Cordfadenverdichtung verursacht wurde, am friktionierten Cordgewebe nicht mehr vorhanden sind. Auf diese Weise erhält man zwar ein gleichförmiges imprägniertes Cordgewebe, jedoch geht Material durch das Wegschneiden der Kantenbereiche verloren.

Ein Aufschneiden der Schußfäden an den Längskanten des Cordgewebes vor dem Imprägnieren desselben, um eine Kettfadendrängung im Kantenbereich zu vermeiden, ist deshalb keine Lösung dieses Problems, weil die Enden der aufgeschnittenen Schußfäden durch das Krimpen aus den Kantenbereichen des Cordgewebes zurückzogen werden und das Gewebe somit im Kantenbereich seine Stabilität verliert. Deshalb müßten auch in einem derartigen Falle die Kantenbereiche des imprägnierten Gewebes abgeschnitten und fortgeworfen werden.

Der Erfindung liegt die Aufgabe zugrunde, ein Cordgewebe für Luftreifen zu schaffen, das auch nach dem Imprägnieren über seine gesamte Breite eine gleichförmige Beschaffenheit aufweist und somit ohne die Notwendigkeit, Teile desselben abschneiden zu müssen, für die Herstellung von Luftreifen zu verwenden ist.

Diese Aufgabe wird erfindungsgemäß dadurch gelöst, daß wenigstens ein Teil der Schußfäden des Cordgewebes vor dem Imprägnieren eine endliche Länge aufweist, die etwa um das Ausmaß der beim Imprägnieren auftretenden Verdichtung im Kantenbereich größer als die Breite des Cordgewebes ist. Auf diese Weise erreicht man, daß die Kettfäden des Cordgewebes über dessen gesamte Breite auch nach dem Imprägnieren gleichmäßig verteilt in einer Ebene liegen, ohne daß das Gewebe durch das Imprägnieren im Kantenbereich an Festigkeit verliert. Die Schußfäden sind dabei so eingewebt, daß sie zunächst im Kantenbereich des Gewebes um eine kurze Strecke doppelt liegen, beispielsweise mit ihren aufgeschnittenen Enden in das Gewebe zurückgelegt oder in einem gewissen Abstand von den Seitenkanten aufgeschnitten sind. Die Herstellung kann also so erfolgen, daß Schußfäden endlicher Länge eingewebt und mit ihren Enden in das Gewebe zurückgelegt werden, oder man webt die Schußfäden in üblicher Weise fortlaufend hin-und hergehend ein und schneidet jeden zweiten Schuß zwischen den Seitenkanten des Gewebes auf. Im letztgenannten Fall reicht nur jeder zweite Schußfaden nach dem Imprägnieren des Cordgewebes bis in dessen Kantenbereich, jedoch reicht dies vollkommen aus, um dem Gewebe auch nach dem Imprägnieren eine ausreichende Kantenfestigkeit zu verleihen.

Da sich bei dem erfindungsgemäßen Cordgewebe die Schußfäden beim Imprägnieren zusammenziehen können, ohne an den Längskanten des Gewebes eine Kettfadendrängung hervorzurufen und ohne sich dort ganz von den Kettfäden zu lösen, ist das Cordgewebe bis an seinen beim Weben erzeugten Rand ohne Abfall als Cordeinlage für Luftreifen aller Art zu verwenden, insbesondere auch für Einlagen-Reifen (Monoply-Reifen), d.h. für Reifen mit nur einer Cordeinlage.

Die Überlänge der Schußfäden ist auf den beim Imprägnieren zu erwartenden Crimp abzustellen, so daß die Schußfäden des imprägnierten Cordgewebes an dessen Längskanten verkürzt im Cordgewebe eingewebt sind. Beispielsweise beträgt die Überlänge der Schußfäden an jedem Ende etwa 15 mm, d.h. die Schußfäden sind um eine Länge von etwa 15 mm an beiden Längskanten des Cordgewebes in dasselbe zurückgelegt bzw. im Abstand von etwa 15 mm von den Längskanten des Cordgewebes aufgeschnitten. Das genaue Maß hängt aber, wie gesagt, von dem zu erwartenden Crimp, d.h. also vom Material der Schußfäden und der Breite des Cordgewebes ab.

In der Zeichnung ist ein Ausführungsbeispiel eines er- findungsgemäßen Cordgewebes für Luftreifen schematisch dargestellt, und zwar zeigt

Fig. 1   eine schaubildliche Ansicht des Cordgewebes vor dem Imprägnieren und

Fig. 2   eine schaubildliche Ansicht desselben Cordgewebes nach dem Imprägnieren.

Das erfindungsgemäße Cordgewebe 1 besteht aus einer Mehrzahl parallelliegender Kettfäden 2 und aus mit diesen Kettfäden verwebten Schußfäden 3.

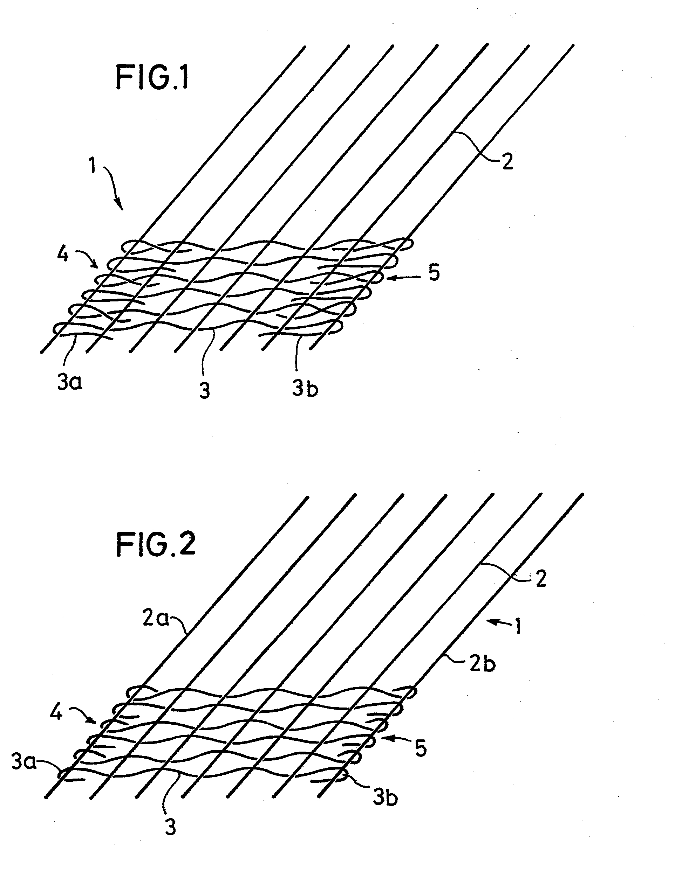

Aus Fig. 1 ist zu erkennen, daß bei dem noch nicht imprägnierten Cordgewebe 1 die Schußfäden 3 eine deutlich größere Länge als die Breite des Gewebes haben, so daß an den Seitenkanten 4 und 5 die an sich überstehenden Enden 3a und 3b umgeschlagen und tief in das Gewebe zurückgelegt sind.

Aus Fig. 2 ist zu erkennen, daß sich die Länge der Schußfäden 3 beim Imprägnieren verringert hat, d.h. daß sich die Schußfäden 3 beim Imprägnieren verkürzten, so daß deren Enden 3a und 3b nun mit geringerer Länge in das Cordgewebe eingewebt sind. Die Schußfäden 3 haben jetzt nur noch eine derartige Länge, daß sie die jeweils äußersten Kettfäden 2a und 2b noch erfassen und somit im Cordgewebe halten. Das imprägnierte Cordgewebe 1 ist über seine gesamte Breite stabil und ohne Beschnitt zu benutzen, weil die beim Imprägnieren auftretende Erhöhung der Schußeinarbeitung keine Drängung der Kettfäden 2 in den Kantenbereichen und damit keine Gewebeverdickungen hervorruft, andererseits die verkürzten Schußfäden die Kettfäden des Gewebes ausreichend zusammenhalten.

G/uh

0128410

Patentansprüche:

1. Cordgewebe für Luftreifen, bestehend aus einer Mehrzahl von parallel zueinander liegenden Kettfäden und aus mit diesen verwebten Schußfäden, d a d u r c h g e k e n n z e i c h n e t, daß wenigstens ein Teil der Schußfäden (3) vor dem Imprägnieren eine endliche Länge aufweist, die etwa um das Ausmaß der beim Imprägnieren oder Dippen auftretenden Längung (Crimp) größer als die Breite des Cordgewebes (1) ist.

2. Cordgewebe nach Anspruch 1, dadurch gekennzeichnet, daß wenigstens an einer seiner beiden Längskanten (4, 5) die überlangen Enden (3a, 3b) der Schußfäden (3) in das Gewebe (1) zurückgefaltet sind.

3. Cordgewebe nach Anspruch 1 oder 2, dadurch gekennzeichnet, daß die Schußfäden (3) eine Überlänge von etwa 10 - 15 mm aufweisen.

4. Cordgewebe nach einem der Ansprüche 1 bis 3, dadurch gekennzeichnet, daß von den kontinuierlich eingelegten Schußfäden (3) jeder zweite Schuß im Abstand von 10 - 15 mm von den Längskanten (4, 5) des Gewebes (1) zerschnitten sind.

G/uh

0128410

FIG.1

1

2

4

5

3a

3

3b

FIG.2

2

2a

1

2b

4

5

3a

3b

3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-1 554 708 (SULZER) <br> * Figuren 1-6 * | 1-4 | D 03 D 1/00 <br> B 60 C 9/00 <br> B 60 C 9/26 |
| | --- | | |
| A | CH-A- 472 519 (SULZER) <br> * Figuren * | 1-4 | |
| | --- | | |
| A | FR-A-1 518 797 (MONFRAY) <br> * Figuren 1-7 * | 1-4 | |
| | ----- | | |

RECHERCHIERTE SACHGEBIETE (Int. Cl. 3)

D 03 D
B 60 C

Der vorliegende Recherchenbericht wurde für alle Patentansprüche erstellt.

| Recherchenort <br> DEN HAAG | Abschlußdatum der Recherche <br> 29-08-1984 | Prüfer <br> BOUTELEGIER C.H.H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82